(19) Europäisches Patentamt
European Patent Office
Office européen des brevets

(11) **EP 2 863 599 B1**

(12) **EUROPÄISCHE PATENTSCHRIFT**

(45) Veröffentlichungstag und Bekanntmachung des Hinweises auf die Patenterteilung:
**03.08.2016 Patentblatt 2016/31**

(51) Int Cl.:
*H04L 27/00* *(2006.01)*        *H04B 1/00* *(2006.01)*
*H04L 27/26* *(2006.01)*        *H04L 1/00* *(2006.01)*
*H04H 40/18* *(2008.01)*

(21) Anmeldenummer: **14189156.4**

(22) Anmeldetag: **16.10.2014**

(54) **IDENTIFIZIEREN DES ÜBERTRAGUNGSMODUS EINES RUNDFUNKSIGNALS**

IDENTIFICATION OF THE TRANSMISSION MODE OF A BROADCAST SIGNAL

IDENTIFICATION DU MODE D'UN SIGNAL DE DIFFUSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.10.2013 DE 102013220927**

(43) Veröffentlichungstag der Anmeldung:
**22.04.2015 Patentblatt 2015/17**

(73) Patentinhaber: **TechniSat Digital GmbH 01156 Dresden (DE)**

(72) Erfinder:
• **Die Erfinder haben auf ihre Nennung verzichtet.**

(56) Entgegenhaltungen:
**EP-A1- 1 715 604     EP-A2- 0 978 974**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren und eine Rundfunkempfangseinrichtung zum Identifizieren eines Funksignals als Funksignal, das einem bestimmten OFDM-Übertragungsstandard entspricht.

OFDM (Orthogonal Frequency-Division Multiplexing) ist ein zum Übertragen digitaler Daten verwendetes Modulationsverfahren. Der zu übertragende Datenstrom wird senderseitig auf mehrere Teildatenströme aufgeteilt, die jeweils mit einem herkömmlichen Modulationsverfahren, beispielsweise DPSK (Differential Phase-Shift Keying), auf eines von mehreren orthogonalen Trägersignalen aufmoduliert werden. Anschließend werden die Trägersignale mittels IFFT (Inverse Fast Fourier Transformation) zueinander addiert, sodass ein zusammengesetztes Basisbandsignal erzeugt wird. Das Basisbandsignal kann dann einer Übertragungsfrequenz aufmoduliert und als Funksignal über eine Sendeantenne abgestrahlt werden.

Empfängerseitig lässt sich der ursprüngliche Datenstrom zurückgewinnen, indem das empfangene Funksignal zunächst ins Basisband umgesetzt wird, sodass das Basisbandsignal rekonstruiert wird. Danach werden aus dem rekonstruierten Basisbandsignal mittels FFT (Fast Fourier Transformation) die orthogonalen Trägersignale separiert. Anschließend werden die Trägersignale demoduliert, sodass die Teildatenströme wiederhergestellt werden, aus denen dann eine Kopie des ursprünglichen Datenstroms zusammengesetzt wird.

OFDM zeichnet sich insbesondere durch seine Robustheit gegen Signalverzerrungen bei Mehrwegeempfang aus. Anwendung findet OFDM beispielsweise bei den Übertragungsstandards DRM (Digital Radio Mondiale), DVB (Digital Video Broadcasting) und DAB (Digital Audio Broadcasting), die zum Übertragen von Rundfunkprogrammen eingesetzt werden. Der Begriff "DAB" umfasst hierin auch die unter der Bezeichnung "DAB+" bekannte Weiterentwicklung von DAB, bei welcher das Audiodatenkompressionsverfahren eAAC+ (ehanced Advanced Audio Coding+) zum Einsatz kommt.

Um ein nach dem DAB-Übertragungsstandard übertragenes Rundfunkprogramm (DAB-Programm) mit einem Rundfunkempfänger wiederzugeben, muss der Tuner des Rundfunkempfängers zunächst auf einen Kanal abgestimmt werden, auf dem ein DAB-Rundfunksignal empfangbar ist. Um einen solchen Kanal aufzufinden, kann beispielsweise ein automatischer Programmsuchlauf ausgeführt werden. Damit wird versucht, sämtliche am Standort des Rundfunkempfängers empfangbaren DAB-Programme zu ermitteln. Dazu wird der Tuner nacheinander auf alle bekannten DAB-Kanäle abgestimmt, um dort jeweils zu prüfen, ob ein DAB-Rundfunksignal vorhanden ist. Das heißt, es wird versucht, ein auf dem DAB-Kanal empfangenes Funksignal als DAB-Rundfunksignal zu erkennen beziehungsweise zu identifizieren. Ein solches Identifikationsverfahren ist in EP 0 978 974 A2 offenbart.

Wird auf einem der DAB-Kanäle ein DAB-Rundfunksignal identifiziert, führt der Rundfunkempfänger eine Synchronisierung auf das Basisbandsignal des DAB-Rundfunksignals aus. Danach wird aus dem Basisbandsignal eine Kopie des ursprünglichen Datenstroms gewonnen, so wie oben beschrieben. Aus dem Datenstrom werden dann die Namen des mit dem DAB-Rundfunksignal übertragenen DAB-Ensembles (DAB-Multiplex) und der in dem DAB-Ensemble enthaltenen DAB-Programme extrahiert. Die Namen werden zusammen mit der Nummer beziehungsweise der Empfangsfrequenz des DAB-Kanals in einer Programmliste abgelegt, sodass sie für den Aufruf eines der DAB-Programme durch einen Benutzer des Rundfunkempfängers bereitstehen.

Wird dagegen auf einem der DAB-Kanäle kein DAB-Rundfunksignal identifiziert, führt der Rundfunkempfänger die obige Synchronisierung nicht aus. Stattdessen stimmt der Rundfunkempfänger den Tuner auf einen anderen bekannten DAB-Kanal ab, um zu prüfen, ob dort ein DAB-Rundfunksignal empfangbar ist.

Einige in Fahrzeugen eingesetzte Rundfunkempfänger initiieren in regelmäßigen Zeitabständen selbständig Programmsuchläufe, sodass die jeweilige Programmliste ständig aktualisiert wird. Zum Teil sind die Rundfunkempfänger auch mit mehreren Tunern ausgestattet, sodass während des Programmsuchlaufs eines Tuners ein vom Benutzer eingestelltes Rundfunkprogramm mit einem anderen Tuner empfangen und wiedergegeben werden kann.

Ein Programmsuchlauf soll möglichst schnell ausgeführt werden, sodass der dafür verwendete Tuner kurzfristig wieder für eine andere Aufgabe zur Verfügung steht, beispielsweise für das Empfangen eines Rundfunkprogramms, das ein Benutzer hören möchte, oder für das Empfangen von Verkehrsdaten. Alternativ dazu kann der Tuner auch für das Ausführen eines weiteren Programmsuchlaufs, um die Programmliste aktuell zu halten, benötigt werden.

Für einen schnellen Programmsuchlauf ist es insbesondere notwendig, dass die auf einem DAB-Kanal durchgeführte Prüfung auf das Vorhandensein eines DAB-Rundfunksignals in kurzer Zeit vorgenommen wird.

Bei einem bekannten Verfahren zum Prüfen des Vorhandenseins eines DAB-Rundfunksignals wird eine Synchronisation über die Nullsymbole mehrerer DAB-Übertragungsrahmen (Transmission Frames) durchgeführt. Dazu muss das zu untersuchende Funksignal beispielsweise für den DAB-Übertragungsmodus I während eines Zeitraums von ca. 190 ms aufgenommen werden, um sicherzustellen, dass ein kompletter DAB-Übertragungsrahmen (kurz: "Übertragungsrahmen") erfasst wurde. Erst dann kann anhand des zeitlichen Abstandes zwischen einem Nullsymbol am Anfang des Übertragungsrahmens und einem Nullsymbol am Anfang des nächsten Übertragungsrahmens beurteilt werden, ob ein DAB-Rundfunksignal vorliegt. Das führt zu erheblichen Verzögerungen, weshalb das Verfahren für den gewünschten schnellen Programmsuchlauf zu zeitaufwendig ist.

Ferner wird das Identifizieren eines empfangenen Funksignals als DAB-Rundfunksignal häufig durch Störungen erschwert, mit denen das Funksignal behaftet sein kann. Bei den Störungen handelt es sich beispielsweise um Intermodulationsprodukte von Fremdkanälen, Eigen-Intermodulationsprodukte aufgrund von Nichtlinearitäten, Interferenzstörungen und Phasenrauschen. Die Störungen können unter anderem dazu führen, dass ein Funksignal nicht sicher als DAB-Rundfunksignal identifizierbar ist.

Somit stellt sich die Aufgabe, ein schnelleres Verfahren zum Identifizieren eines Funksignals als Funksignal, das einem bestimmten OFDM-Übertragungsstandard entspricht, bereitzustellen. Außerdem soll das Verfahren sicher funktionieren. Insbesondere soll eine mit dem Verfahren gemachte Aussage, dass ein Funksignal dem OFDM-Übertragungsstandard entspricht, zuverlässig sein.

Die Aufgabe wird mit dem erfindungsgemäßen Verfahren zum Identifizieren eines Funksignals als Funksignal, das einem bestimmten OFDM-Übertragungsstandard entspricht, gelöst. Der OFDM-Übertragungsstandard ist dadurch gekennzeichnet, dass dem OFDM-Übertragungsstandard entsprechende OFDM-Symbole jeweils ein Schutzintervall aufweisen. Außerdem verfügt der OFDM-Übertragungsstandard über mehrere Übertragungsmodi, wobei in verschiedenen der Übertragungsmodi übertragene OFDM-Symbole jeweils eine andere Symbollänge aufweisen.

Das erfindungsgemäße Verfahren weist folgende Schritte auf:

- Empfangen eines Funksignals,
- Umsetzen des empfangenen Funksignals in das Basisband des OFDM-Übertragungsstandards, sodass ein Basisbandsignal erzeugt wird,
- Berechnen einer Maximum-Korrelationsmetrik des Basisbandsignals für jeden der Übertragungsmodi unter Verwendung von Parametern des jeweiligen Übertragungsmodus,
- Berechnen eines Spitzenwert/Durchschnittswert-Verhältnisses für jede der Maximum-Korrelationsmetriken,
- Ermitteln des größten Spitzenwert/Durchschnittswert-Verhältnisses derjenigen Spitzenwert/Durchschnittswert-Verhältnisse, die einen vorgegebenen ersten Schwellenwert überschreiten,
- Berechnen jeweils einer Differenz zwischen dem ermittelten Spitzenwert/Durchschnittswert-Verhältnis und jedem der anderen Spitzenwert/Durchschnittswert-Verhältnisse und
- Signalisieren, dass das Funksignal dem OFDM-Übertragungsstandard entspricht, wenn jede der Differenzen einen vorgegebenen zweiten Schwellenwert überschreitet.

Demzufolge wird mit dem erfindungsgemäßen Verfahren geprüft, ob ein empfangenes Funksignal einem bestimmten OFDM-Übertragungsstandard entspricht, das heißt, ob das Funksignal nach dem OFDM-Übertragungsstandard übertragen wird.

Das Verfahren ist für solche OFDM-Übertragungsstandards geeignet, deren OFDM-Symbole (kurz: "Symbole") jeweils ein Schutzintervall (Guardintervall) aufweisen und die jeweils mehrere Übertragungsmodi mit unterschiedlichen Symbollängen aufweisen. Diese Voraussetzungen werden unter anderem von DAB erfüllt, denn die Symbole eines DAB-Rundfunksignals weisen jeweils ein Schutzintervall auf. Außerdem verfügt DAB über vier Übertragungsmodi (Übertragungsmodus I bis Übertragungsmodus IV), die durch verschiedene Symbollängen gekennzeichnet sind. Folglich lässt sich mit dem erfindungsgemäßen Verfahren unter anderem prüfen, ob ein empfangenes Funksignal dem DAB-Übertragungsstandard entspricht.

Gemäß dem Verfahren wird für jeden der Übertragungsmodi des OFDM-Übertragungsstandards eine Maximum-Korrelationsmetrik (MCM, Maximum Correlation Metric) des Basisbandsignals berechnet. Auf diese Weise kann eine aufgrund eines Schutzintervalls vorliegende Redundanz im Signalverlauf eines Symbols erkannt werden. Diese Redundanz kommt dadurch zustande, dass das Schutzintervall, welches dem Nutzanteil des Symbols vorangeht, eine Kopie des letzten Signalabschnitts des Nutzanteils aufweist. Damit enthält das Symbol zwei Signalintervalle mit demselben Signalverlauf. Das führt dazu, dass eine der Maximum-Korrelationsmetriken ein markantes Maximum zeigt, wenn das Funksignal in demjenigen Übertragungsmodus übertragen wird, für den die Maximum-Korrelationsmetrik berechnet wurde.

Bei den nachfolgenden Verfahrenschritten wird versucht, ein solches markantes Maximum zu detektieren. Gelingt dies, wird signalisiert, dass das Funksignal dem OFDM-Übertragungsstandard entspricht.

Zum Detektieren des markanten Maximums wird zunächst für jede der Maximum-Korrelationsmetriken ein Spitzenwert/Durchschnittswert-Verhältnis (PAR, Peak to Average Ratio) berechnet. Mit den Spitzenwert/Durchschnittswert-Verhältnissen werden untereinander vergleichbare Referenzwerte geschaffen, welche sich als Eingangsgrößen für das folgende zweistufige Auswahlverfahren eignen.

Bei der ersten Stufe des Auswahlverfahrens wird das größte derjenigen Spitzenwert/Durchschnittswert-Verhältnisse, die einen vorgegebenen ersten Schwellenwert überschreiten, ermittelt. Dieses Spitzenwert/Durchschnittswert-Verhältnis kennzeichnet den Übertragungsmodus, dem das Funksignal möglicherweise entspricht.

Das erwähnte Kriterium, dass das ermittelte Spitzenwert/Durchschnittswert-Verhältnis den ersten Schwellenwert überschreiten muss, basiert auf der Überlegung, dass nur eine Maximum-Korrelationsmetrik, die ein Spitzenwert/Durchschnittswert-Verhältnis einer bestimmten Mindestgröße aufweist, als Träger des markanten Maximums in Frage kommt.

Idealerweise ist das ermittelte Spitzenwert/Durchschnittswert-Verhältnis deutlich größer als die anderen Spitzenwert/Durchschnittswert-Verhältnisse. In der Praxis kommt es aber häufig vor, dass das ermittelte Spitzenwert/Durchschnittswert-Verhältnis dicht bei einem der anderen Spitzenwert/Durchschnittswert-Verhältnisse liegt. Das ist beispielsweise auf die oben genannten Störungen zurückzuführen. In solchen Fällen ist kein markantes Maximum einer der Maximum-Korrelationsmetriken erkennbar, wodurch keine sichere Aussage zum Übertragungsstandard, dem das Funksignal entspricht, möglich ist. Um herauszufinden, ob ein solcher Fall vorliegt, wird bei der zweiten Stufe des Auswahlverfahrens untersucht, wie sich das ermittelte Spitzenwert/Durchschnittswert-Verhältnis bezüglich der anderen Spitzenwert/Durchschnittswert-Verhältnisse verhält.

Im Einzelnen wird bei der zweiten Stufe des Auswahlverfahrens jeweils eine Differenz zwischen dem bei der ersten Stufe des Auswahlverfahrens ermittelten Spitzenwert/Durchschnittswert-Verhältnis und jedem der anderen Spitzenwert/Durchschnittswert-Verhältnisse berechnet. Ferner wird jede der Differenzen mit einem zweiten Schwellenwert verglichen. Wenn jede der Differenzen den zweiten Schwellenwert überschreitet, wird davon ausgegangen, dass das Funksignal in dem Übertragungsmodus übertragen wurde, zu dem das ermittelte Spitzenwert/Durchschnittswert-Verhältnis gehört. In diesem Fall wird signalisiert, dass das Funksignal dem OFDM-Übertragungsstandard entspricht.

Das erwähnte Kriterium, dass jede der Differenzen den zweiten Schwellenwert überschreiten muss, basiert auf der Überlegung, dass ein markantes Maximum nur dann vorliegt, wenn das ermittelte Spitzenwert/Durchschnittswert-Verhältnis deutlich größer als jedes der anderen Spitzenwert/Durchschnittswert-Verhältnisse ist. Sollten dagegen eine oder mehrere der Differenzen den zweiten Schwellenwert nicht überschreiten, unterbleibt die oben genannte Signalisierung. Auf diese Weise wird eine unsichere Aussage zum OFDM-Übertragungsstandard des Funksignals vermieden. Dadurch ist eine bei dem Verfahren mit der Signalisierung gemachte Aussage, dass das empfangene Funksignal dem OFDM-Übertragungsstandard entspricht, zuverlässig.

Außerdem muss bei dem erfindungsgemäßen Verfahren, im Gegensatz zu dem oben beschriebenen bekannten Verfahren, das Funksignal nicht so lange empfangen werden, bis sichergestellt ist, dass ein kompletter Übertragungsrahmen erfasst wurde. Stattdessen reicht das Empfangen des Funksignals während eines deutlich kürzeren Zeitraums aus, in dem nur wenige Symbole erfasst werden. Somit zeichnet sich das erfindungsgemäße Verfahren auch durch seine Schnelligkeit aus.

Zusammenfassend erlaubt das erfindungsgemäße Verfahren ein besonders schnelles Identifizieren eines Funksignals als Funksignal, das einem bestimmten OFDM-Übertragungsstandard entspricht. Außerdem ist eine mit dem Verfahren gemachte Aussage, dass ein Funksignal dem OFDM-Übertragungsstandard entspricht, zuverlässig.

Die Aufgabe, ein Funksignal schnell und sicher als Funksignal, das einem bestimmten OFDM-Übertragungsstandard mit den oben genannten Charakteristika entspricht, zu identifizieren, wird ferner mit einer Rundfunkempfangseinrichtung gemäß der Erfindung gelöst, welche folgende Bestandteile aufweist:

- eine Empfangseinheit, welche zum Empfangen eines Funksignals und zum Umsetzen des empfangenen Funksignals in das Basisband des OFDM-Übertragungsstandards, sodass ein Basisbandsignal erzeugt wird, eingerichtet ist, und

- eine Recheneinheit, welche zum Berechnen einer Maximum-Korrelationsmetrik des Basisbandsignals für jeden der Übertragungsmodi unter Verwendung von Parametern des jeweiligen Übertragungsmodus, Berechnen eines Spitzenwert/Durchschnittswert-Verhältnisses für jede der Maximum-Korrelationsmetriken, Ermitteln des größten Spitzenwert/Durchschnittswert-Verhältnisses derjenigen Spitzenwert/Durchschnittswert-Verhältnisse, die einen vorgegebenen ersten Schwellenwert überschreiten, Berechnen jeweils einer Differenz zwischen dem ermittelten Spitzenwert/Durchschnittswert-Verhältnis und jedem der anderen Spitzenwert/Durchschnittswert-Verhältnisse und Signalisieren, dass das Funksignal dem OFDM-Übertragungsstandard entspricht, wenn jede der Differenzen einen vorgegebenen zweiten Schwellenwert überschreitet, eingerichtet ist.

Weitere Ausführungsformen der Erfindung sind in den abhängigen Patentansprüchen beschrieben.

Die Erfindung wird nun Bezug nehmend auf folgende Figuren näher erläutert:

Figur 1 zeigt ein Blockschema einer Ausführungsform der Rundfunkempfangseinrichtung gemäß der Erfindung.

Figur 2 zeigt ein Ablaufschema einer Ausführungsform des erfindungsgemäßen Verfahrens.

Figur 3 zeigt den Aufbau einer Gleichung zum Berechnen einer Autokorrelation gemäß der Erfindung.

Figur 4 zeigt Abläufe zum Berechnen von Maximum-Korrelationsmetriken für verschiedene DAB-Übertragungsmodi gemäß der Erfindung.

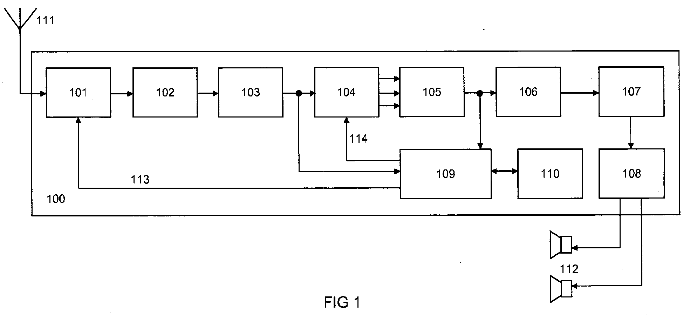

Im Folgenden wird die Erfindung Bezug nehmend auf Figur 1 näher erläutert, welche ein Blockschema einer Ausführungsform der erfindungsgemäßen Rundfunkempfangseinrichtung zeigt.

Die Rundfunkempfangseinrichtung 100 ist im vorliegenden Fall ein DAB-Rundfunkempfänger. Alternativ dazu kann eine erfindungsgemäße Rundfunkempfangseinrichtung auch für einen anderen OFDM-Übertragungsstandard geeignet sein, beispielsweise für DRM oder für DVB. Es ist allerdings erforderlich, dass die nach dem OFDM-Übertragungsstandard übertragenen Symbole jeweils ein Schutzintervall aufweisen. Außerdem muss der OFDM-Übertragungsstandard mehrere Übertragungsmodi aufweisen, wobei in verschiedenen der Übertragungsmodi übertragene Symbole jeweils eine andere Symbollänge besitzen.

Die Rundfunkempfangseinrichtung 100 verfügt über mehrere Funktionsmodule, die in Figur 1 als Rechtecke dargestellt sind. Zu den Funktionsmodulen gehören eine Empfangseinheit 101, ein Analog-Digital-Konverter 102, eine Quadratur-Demodulationseinheit 103, eine FFT-Einheit 104, eine Viterbi-Dekodiereinheit 105, eine Audio-Dekodiereinheit 106, ein Digital-Analog-Konverter 107, eine Audio-Verstärkereinheit 108, eine Recheneinheit 109 und eine Speichereinheit 110.

Neben den gezeigten Funktionsmodulen kann die Rundfunkempfangseinrichtung 100 noch weitere Funktionsmodule aufweisen. Ferner können mehrere der gezeigten Funktionsmodule, beispielsweise die Quadratur-Demodulationseinheit 103, die FFT-Einheit 104, die Viterbi-Dekodiereinheit 105, die Audio-Dekodiereinheit 106 und die Recheneinheit 109, sowie optional noch weitere Funktionsmodule, auf einem integrierten Schaltkreis zu einem Ein-Chip-System (System-on-Chip) zusammengefasst sein.

Zusätzlich zu den Funktionsmodulen verfügt die Rundfunkempfangseinrichtung 100 über mehrere Signalleitungen, die in Figur 1 als Pfeile dargestellt sind. Neben den gezeigten Signalleitungen kann die Rundfunkempfangseinrichtung 100 auch noch weitere Signalleitungen aufweisen.

Die als Superheterodynempfänger ausgebildete Empfangseinheit 101 (Tuner) kann über eine extern angeschlossene Antenne 111 ein hochfrequentes Funksignal empfangen und mittels Demodulation in das Basisband des DAB-Übertragungsstandards umsetzen, sodass ein analoges Basisbandsignal generiert wird. Dafür verwendet die Empfangseinheit 101 beispielsweise einen Mischer und ein Filterelement (nicht gezeigt).

Der Analog-Digital-Konverter 102 ist dazu eingerichtet, das von der Empfangseinheit 101 erhaltene analoge Basisbandsignal abzutasten und die Abtastwerte zu digitalisieren. Damit wird ein digitales Basisbandsignal erzeugt, welches an die Quadratur-Demodulationseinheit 103 weitergeleitet werden kann.

Die Quadratur-Demodulationseinheit 103 dient zum Demodulieren des digitalen Basisbandsignals in eine phasengleiche Komponente und eine orthogonale Komponente. Die beiden Komponenten können in Form eines Datenstroms sogenannter IQ-Daten (IQ-Samples), welcher das Basisbandsignal repräsentiert, zu der FFT-Einheit 104 und zu der Recheneinheit 109 transportiert werden.

Die FFT-Einheit 104 ist dafür vorgesehen, das Basisbandsignal mit den IQ-Daten aus dem Zeitbereich in den Frequenzbereich zu transformieren, sodass mehrere orthogonale Trägersignale bereitgestellt werden.

Die Viterbi-Dekodiereinheit 105 ist dafür ausgebildet, die orthogonalen Trägersignale zu demodulieren und einem Aufheben der Verschachtelung (Deinterleaving) und einer Fehlerkorrektur zu unterziehen, wobei mehrere Teildatenströme generiert und zu einer Kopie des ursprünglichen Datenstroms zusammengeführt werden. Dieser Datenstrom wird sowohl an die Audio-Dekodiereinheit 106 als auch an die Recheneinheit 109 weitergeleitet.

Da die FFT-Einheit 104 und die Viterbi-Dekodiereinheit 105 zum Verarbeiten des Basisbandsignals dienen können die genannten Einheiten auch als Basisbandsignal-Verarbeitungseinheiten bezeichnet werden.

Die Audio-Dekodiereinheit 106 kann den von der Viterbi-Dekodiereinheit 105 gelieferten Datenstrom unter Verwendung eines Audiocodecs dekodieren, sodass aus dem Datenstrom ein digitales Audiosignal extrahiert wird.

Der Digital-Analog-Konverter 107 ist dazu eingerichtet, das digitale Audiosignal in ein analoges Audiosignal umzuwandeln.

Die Audio-Verstärkereinheit 108 ist dafür vorgesehen, das analoge Audiosignal zu verstärken, sodass es über extern angeschlossene Lautsprecher 112 akustisch wiedergegeben werden kann.

Die Recheneinheit 109 ist zum Ausführen verschiedener Rechen- und Steueroperationen ausgebildet. Dafür verfügt die Recheneinheit 109 beispielsweise über einen digitalen Signalprozessor (DSP) und einen ARM(Advanced Risc Machines)-Prozessor.

Insbesondere kann die Recheneinheit 109 den Datenstrom mit den IQ-Daten von der Quadratur-Demodulationseinheit 103 empfangen und derart verarbeiten, dass für jeden der vier DAB-Übertragungsmodi eine Maximum-Korrelationsmetrik (MCM) des Basisbandsignals berechnet wird. Ferner kann die Recheneinheit 109 für jede der Maximum-Korrelationsmetriken ein Spitzenwert/Durchschnittswert-Verhältnis (PAR) berechnen. Weiterhin kann die Recheneinheit 109 das größte derjenigen Spitzenwert/Durchschnittswert-Verhältnisse ermitteln, die einen vorgegebenen ersten Schwellenwert überschreiten. Außerdem kann die Recheneinheit 109 jeweils eine Differenz zwischen dem ermittelten Spitzenwert/Durchschnittswert-Verhältnis und jedem der anderen Spitzenwert/Durchschnittswert-Verhältnisse berechnen.

Darüber hinaus kann die Recheneinheit 109 signalisieren, dass das Funksignal dem DAB-Übertragungsstandard entspricht, wenn jede der Differenzen einen vorgegebenen zweiten

Schwellenwert überschreitet. Die Recheneinheit 109 kann aber auch signalisieren, dass das Funksignal nicht dem DAB-Übertragungsstandard entspricht, wenn keines der Spitzenwert/Durchschnittswert-Verhältnisse den ersten Schwellenwert überschreitet.

Zusätzlich kann die Recheneinheit 109 die Empfangseinheit 102 über eine erste Steuerleitung 113 auf einen bestimmten DAB-Kanal beziehungsweise auf die Empfangsfrequenz eines bestimmten DAB-Kanals abstimmen. Außerdem kann die Recheneinheit 107 die FFT-Einheit 104 über eine zweite Steuerleitung 114 aktivieren oder deaktivieren.

Weiterhin kann die Recheneinheit 109 aus einem von der Viterbi-Dekodiereinheit 105 erhaltenen Datenstrom Textinformationen extrahieren, die beispielsweise Ensemblenamen, Programmnamen, Musiktitel, Interpreten und Nachrichten empfangener DAB-Programme repräsentieren. Die Recheneinheit 109 kann die Ensemblenamen und die Programmnamen in der Speichereinheit 110 ablegen, sodass die Ensemblenamen und die Programmnamen jeweils mit einem DAB-Kanal beziehungsweise der Empfangsfrequenz eines DAB-Kanals verknüpft werden. Dadurch stehen diese Informationen für einen Aufruf eines der DAB-Programme, beispielsweise durch einen Benutzer der Rundfunkempfangseinrichtung 100, bereit.

Die Speichereinheit 110 ist als EEPROM und damit als nichtflüchtiger Speicher ausgebildet und über eine bidirektionale Datenverbindung mit der Recheneinheit 109 verbunden. Die Speichereinheit 105 dient unter anderem zum Speichern einer Programmliste, welche bekannte DAB-Kanäle inklusive der jeweiligen Empfangsfrequenz enthält. Ferner sind in der Programmliste eine Reihe von DAB-Ensembles aufgeführt, die jeweils einem der DAB-Kanäle zugeordnet sind. Außerdem weist die Programmliste mehrere DAB-Programme auf, die jeweils zu einem der DAB-Ensembles gehören.

Alternativ dazu kann die Programmliste auch in einer anderen Speichereinheit der Rundfunkempfangseinrichtung 100 abgelegt sein, beispielsweise in einem (nicht gezeigten) Arbeitsspeicher der Recheneinheit 109.

Zusätzlich dient die Speichereinheit 110 zum Speichern des ersten Schwellenwerts und des zweiten Schwellenwerts, deren Verwendung oben erläutert wurde. Bei dem ersten Schwellenwert und dem zweiten Schwellenwert kann es sich um experimentell bestimmte Erfahrungswerte handeln. Weiterhin ist in der Speichereinheit 110 eine vorgegebene Höchstzahl von Versuchen, auf demselben DAB-Kanal nacheinander empfangene Funksignale zu identifizieren, abgelegt. Die Verwendung dieser Höchstzahl wird weiter unten erläutert.

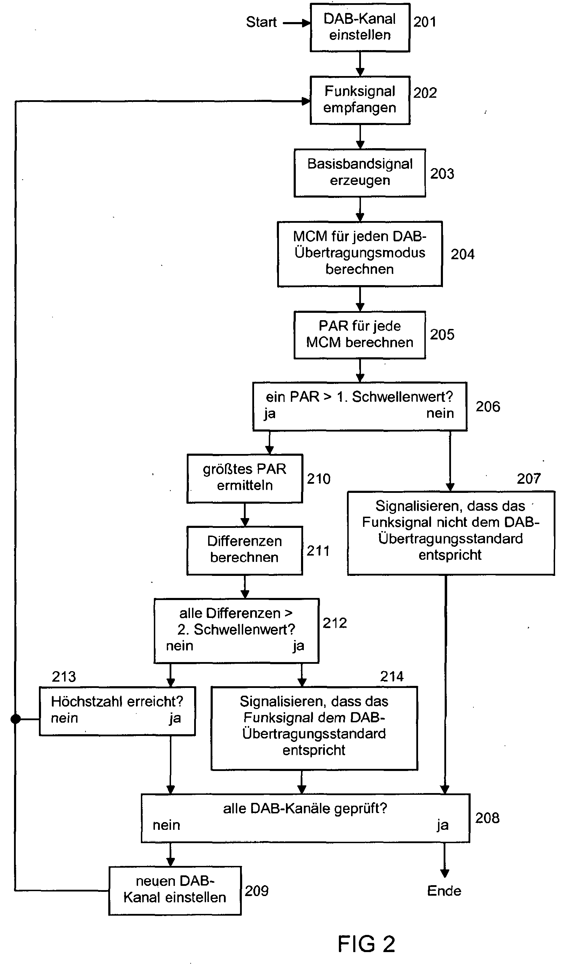

Im Folgenden wird die Erfindung Bezug nehmend auf Figur 2 beschrieben, die ein Ablaufschema einer Ausführungsform des erfindungsgemäßen Verfahrens zeigt, welches mit der Rundfunkempfangseinrichtung 100 aus Figur 1 ausgeführt wird.

Nach dem Start des Verfahrens wird bei einem ersten Verfahrensschritt 201 ein DAB-Kanal eingestellt. Dazu wird die Empfangseinheit 101 mittels der Recheneinheit 109 auf einen der in der Programmliste aufgeführten bekannten DAB-Kanäle abgestimmt, indem die Recheneinheit 109 über die erste Steuerleitung 113 ein entsprechendes Steuersignal an die Empfangseinheit 101 sendet. Das Steuersignal bewirkt, dass die Empfangseinheit 101 auf die Empfangsfrequenz des DAB-Kanals abgestimmt wird.

Daraufhin empfängt die Empfangseinheit 101 bei einem zweiten Verfahrensschritt 202 über die Antenne 111 ein Funksignal, dessen Art vorerst unbekannt ist. Insbesondere ist unbekannt, ob es sich bei dem Funksignal um ein dem DAB-Übertragungsstandard entsprechendes Rundfunksignal oder um ein anderes Funksignal handelt.

Bei einem dritten Verfahrensschritt 203 wird das empfangene Funksignals mittels der Empfangseinheit 101 in das DAB-Basisband umgesetzt, sodass ein analoges Basisbandsignal erzeugt wird. Das analoge Basisbandsignal wird unter Verwendung des Analog-Digital-Konverters 102 digitalisiert, sodass es in ein digitales Basisbandsignals umgewandelt wird. Die Quadratur-Demodulationseinheit 103 demoduliert das digitale Basisbandsignals in eine phasengleiche Komponente und eine orthogonale Komponente (IQ-Daten). Das digitale Basisbandsignal wird dann in Form eines Datenstroms der IQ-Daten an die FFT-Einheit 104 und an die Recheneinheit 109 übertragen.

Bei einem vierten Verfahrensschritt 204 wird mittels der Recheneinheit 109 für die vier DAB-Übertragungsmodi jeweils eine Maximum-Korrelationsmetrik (MCM) des Basisbandsignals berechnet. Die Berechnung solch einer Maximum-Korrelationsmetrik wird im Folgenden beschrieben. Für eine ausführlichere Beschreibung der Berechnung wird auf den Anhang verwiesen.

Zum Berechnen der Maximum-Korrelationsmetrik wird zunächst einer der DAB-Übertragungsmodi ausgewählt. Dann wird für mehrere aneinandergereihte Abschnitte des Basisbandsignals, deren Länge jeweils der Länge eines Symbols des ausgewählten Übertragungsmodus entspricht, jeweils eine Autokorrelationsfunktion berechnet.

Die Autokorrelationsfunktion repräsentiert die Korrelation zweier Teilbereiche des Basisbandsignals entlang des jeweiligen Abschnitts. Die Länge der Teilbereiche entspricht jeweils dem Schutzintervall eines Symbols des ausgewählten Übertragungsmodus. Ferner sind die beiden Teilbereiche um einen Abstand zueinander verschoben, welcher der Länge des Nutzintervalls des Symbols entspricht. In die Berechnung der Autokorrelationsfunktion gehen spezifische Parameter des ausgewählten Übertragungsmodus ein, beispielsweise seine (Gesamt-)Symboldauer, seine Nutzsymboldauer und/oder seine Schutzsymboldauer.

Die Anzahl der Abschnitte des Basisbandsignals, für die jeweils eine Autokorrelationsfunktion berechnet wird, beträgt beispielsweise zwischen fünf und dreizehn. In praktischen Versuchen hat sich eine Anzahl von acht Abschnitten als besonders günstig erwiesen. Grundsätzlich lässt sich mit einer Anzahl von maximal ca. fünfundsiebzig Abschnitten ein zeitlicher Gewinn gegenüber dem oben beschriebenen bekannten Verfahren erzielen, bei dem eine Synchronisation über die Nullsymbole mehrerer Übertragungsrahmen durchgeführt wird.

Danach werden die Autokorrelationsfunktionen der einzelnen Abschnitte gemittelt, sodass die Maximum-Korrelationsmetrik des Basisbandsignals für den ausgewählten Übertragungsmodus bereitgestellt wird. Dazu wird aus jeder Gruppe von Funktionswerten der Autokorrelationsfunktionen, die demselben Funktionsargument zugeordnet sind, ein Mittelwert berechnet, welcher den Funktionswert der Maximum-Korrelationsmetrik repräsentiert, der dem Funktionsargument zugeordnet ist.

Das Berechnen der Autokorrelationsfunktionen und der Maximum-Korrelationsmetrik wird für jeden der anderen drei DAB-Übertragungsmodi in gleicher Weise ausgeführt, sodass für jeden der vier DAB-Übertragungsmodi eine Maximum-Korrelationsmetrik bereitgestellt wird.

Aufgrund der unterschiedlichen Symbollängen der Übertragungsmodi sind die Maximum-Korrelationsmetriken quantitativ nicht miteinander vergleichbar. Daher wird bei einem fünften Verfahrensschritt 205 mittels der Recheneinheit 109 für jede der Maximum-Korrelationsmetriken ein Spitzenwert/Durchschnittswert-Verhältnis (PAR) berechnet. Mit den Spitzenwert/Durchschnittswert-Verhältnissen werden untereinander vergleichbare Referenzwerte geschaffen, die sich für die nachfolgenden Verfahrensschritte eignen.

Bei einem sechsten Verfahrensschritt 206 wird mittels der Recheneinheit 109 geprüft, ob zumindest eines der Spitzenwert/Durchschnittswert-Verhältnisse den vorgegebenen ersten Schwellenwert, welcher in der Speichereinheit 110 gespeichert ist, überschreitet.

Überschreitet keines der Spitzenwert/Durchschnittswert-Verhältnisse den ersten Schwellenwert, signalisiert die Recheneinheit 109 bei einem siebenten Verfahrenschritt 207, dass das empfangene Funksignal nicht dem DAB-Übertragungsstandard entspricht. Dazu sendet die Recheneinheit 109 ein Steuersignal über die zweite Steuerleitung 114 an die FFT-Einheit 104, sodass die FFT-Einheit 104, falls sie aktiviert ist, deaktiviert wird. Auf diese Weise wird vermieden, dass die FFT-Einheit 104 das von der Quadratur-Demodulationseinheit 103 gelieferte Basisbandsignal verarbeitet.

Die Signalisierung kann alternativ oder zusätzlich dazu auch auf eine andere Weise erfolgen, beispielsweise indem die Information, dass auf dem eingestellten Kanal kein DAB-Rundfunksignal empfangbar ist, an einen Benutzer der Rundfunkempfangseinrichtung 100 ausgegeben wird.

Zusätzlich prüft die Recheneinheit 109 bei einem achten Verfahrensschritt 208, ob bereits alle bekannten DAB-Kanäle auf das Vorhandensein eines DAB-Rundfunksignals geprüft wurden. Wenn das nicht der Fall ist, wird die Empfangseinheit 101 bei einem neunten Verfahrensschritt 209 auf einen anderen bekannten DAB-Kanal, der bei dem Verfahren noch nicht eingestellt war, beziehungsweise auf die Empfangsfrequenz eines solchen DAB-Kanals abgestimmt. Dazu sendet die Recheneinheit 109 über die erste Steuerleitung 113 ein entsprechendes Steuersignal an die Empfangseinheit 101. Nach dem Einstellen des neuen DAB-Kanals wird das Verfahren beginnend mit Verfahrenschritt 202 emeut durchlaufen. Wenn dagegen beim achten Verfahrensschritt 208 festgestellt wird, dass bereits alle bekannten DAB-Kanäle auf das Vorhandensein eines DAB-Rundfunksignals geprüft wurden, wird das Verfahren beendet.

Überschreiten dagegen eines oder mehrere der beim fünften Verfahrensschritt 205 berechneten Spitzenwert/Durchschnittswert-Verhältnisse den ersten Schwellenwert, wird bei einem zehnten Verfahrensschritt 210 von der Recheneinheit 109 das größte der Spitzenwert/Durchschnittswert-Verhältnisse ermittelt. Dann wird bei einem elften Verfahrensschritt 211 mittels der Recheneinheit 109 jeweils eine Differenz zwischen dem größten Spitzenwert/Durchschnittswert-Verhältnis und jedem der anderen Spitzenwert/Durchschnittswert-Verhältnisse berechnet, sodass im vorliegenden Fall drei Differenzen bereitgestellt werden.

Ferner wird bei einem zwölften Verfahrensschritt 212 mittels der Recheneinheit 109 geprüft, ob jede der drei Differenzen den vorgegebenen zweiten Schwellenwert, welcher in der Speichereinheit 110 gespeichert ist, überschreitet.

Überschreiten eine oder mehrere der Differenzen den zweiten Schwellenwert nicht, kann das Funksignal nicht identifiziert werden. In diesem Fall wird bei einem dreizehnten Verfahrensschritt 213 geprüft, ob bei dem Verfahren schon eine vorgegebene Höchstzahl erfolgloser Versuche, das Funksignal zu identifizieren, erreicht wurde. Die Höchstzahl ist in der Speichereinheit 110 abgelegt und beträgt beispielsweise zwei, drei, vier, fünf, sechs; sieben, acht, neun oder zehn.

Wenn die Höchstzahl noch nicht erreicht wurde, wird das Verfahren beginnend bei Verfahrensschritt 202 erneut durchlaufen. Dadurch wird auf demselben DAB-Kanal, das heißt auf derselben Empfangsfrequenz, ein Funksignal in einem anderen Zeitraum als beim vorigen Verfahrensdurchlauf, empfangen und in ein Basisbandsignal umgewandelt. Dann wird auch dieses Basisbandsignal den oben beschriebenen Untersuchungen unterzogen. Damit wird ein weiterer Versuch unternommen, ein auf dem DAB-Kanal empfangenes Funksignal zu identifizieren.

Wenn dagegen die Höchstzahl erfolgloser Versuche, das Funksignal zu identifizieren, bereits erreicht wurde, wird das Verfahren mit dem achten Verfahrensschritt 208 fortgesetzt.

Bei einer anderen Ausführungsform der Erfindung wird, wenn eine oder mehrere der Differenzen den zweiten Schwellenwert nicht überschreiten, kein weiterer Versuch unternommen, das empfangene Funksignal zu identifizieren. Stattdessen wird das Verfahren in diesem Fall sofort mit dem achten Verfahrensschritt 208 fortgesetzt, sodass der dreizehnte Verfahrensschritt 213 übersprungen wird.

Optional kann die Recheneinheit 109, wenn eine oder mehrere der Differenzen den zweiten Schwellenwert nicht überschreiten, ein Steuersignal über die zweite Steuerleitung 114 an die FFT-Einheit 104 senden, sodass die FFT-Einheit 104, falls sie aktiviert ist, deaktiviert wird. Auf diese Weise wird vermieden, dass die FFT-Einheit 104 das von der Quadratur-Demodulationseinheit 103 gelieferte Basisbandsignal verarbeitet.

Wird dagegen bei dem zwölften Verfahrensschritt 212 festgestellt, dass jede der Differenzen den zweiten Schwellenwert überschreitet, signalisiert die Recheneinheit 109 bei einem vierzehnten Verfahrensschritt 214, dass das empfangene Funksignal nach dem DAB-Übertragungsstandard übertragen wird. Dazu sendet die Recheneinheit 109 über die zweite Steuerleitung 114 ein Steuersignal an die FFT-Einheit 104. Das Steuersignal bewirkt, dass die FFT-Einheit 104, falls sie deaktiviert ist, aktiviert wird und mit dem Verarbeiten der von der Quadratur-Demodulationseinheit 103 erhaltenen IQ-Daten beginnt. Dadurch erzeugt die FFT-Einheit 104 gemeinsam mit der Viterbi-Dekodiereinheit 105 eine Kopie des ursprünglichen Datenstroms, welche an die Audio-Dekodiereinheit 106 und die Recheneinheit 109 weitergeleitet wird.

Die Signalisierung kann alternativ oder zusätzlich dazu auch auf eine andere Weise erfolgen, beispielsweise indem die Information, dass auf dem eingestellten Kanal ein DAB-Rundfunksignal empfangbar ist, an einen Benutzer der Rundfunkempfangseinrichtung 100 ausgegeben wird.

Vor dem Verarbeiten des Basisbandsignals durch die FFT-Einheit 104 wird die Rundfunkempfangseinrichtung 100 noch mit Hilfe der Recheneinheit 109 auf das Basisbandsignal synchronisiert. Dabei wird eine Rahmensynchronisierung vorgenommen, für welche der Übertragungsmodus, in dem das empfangene Funksignal übertragen wird, verwendet wird. Dabei handelt es sich um denjenigen Übertragungsmodus, zu dem das größte der Spitzenwert/Durchschnittswert-Verhältnisse gehört, also um denjenigen Übertragungsmodus, dessen Maximum-Korrelationsmetrik das größte der Spitzenwert/Durchschnittswert-Verhältnisse aufweist.

Ferner extrahiert die Recheneinheit 109 aus dem von der Viterbi-Dekodiereinheit 105 gelieferten Datenstrom den Ensemblenamen und die Programmnamen des auf dem DAB-Kanal übertragenen DAB-Multiplexes. Anschließend legt die Recheneinheit 109 den Ensemblenamen und die Programmnamen in der Programmliste in der Speichereinheit 110 ab, sodass diese mit dem eingestellten DAB-Kanal beziehungsweise der Empfangsfrequenz des eingestellten DAB-Kanals verknüpft werden. Damit stehen diese Informationen für einen Aufruf eines der DAB-Programme durch einen Benutzer der Rundfunkempfangseinrichtung 100 bereit.

Anschließend wird das Verfahren mit dem achten Verfahrensschritt 208 fortgesetzt.

Demzufolge wird das Verfahren so oft wiederholt, bis alle bekannten DAB-Kanäle auf das Vorhandensein eines DAB-Rundfunksignals geprüft wurden, sodass eine vollständige Programmliste vorliegt.

Zu bemerken ist, dass die beschriebenen Ausführungsformen das Identifizieren eines dem DAB-Übertragungsstandard entsprechenden Funksignals betreffen. Die Erfindung kann jedoch in gleicher Weise auch für einen anderen OFDM-Übertragungsstandard verwendet werden, beispielsweise für DRM oder für DVB. Es ist allerdings erforderlich, dass die dem OFDM-Übertragungsstandard entsprechenden Symbole jeweils ein Schutzintervall aufweisen. Außerdem muss der OFDM-Übertragungsstandard mehrere Übertragungsmodi aufweisen, wobei in verschiedenen der Übertragungsmodi übertragene Symbole jeweils eine andere Symbollänge besitzen.

**Berechnung einer Maximum-Korrelationsmetrik für einen DAB-Übertragungsmodus**

Die Maximum-Korrelationsmetrik macht sich das Schutzintervall, welches bei DAB zur Kompensation der Mehrwegausbreitung konzipiert ist, zu nutze. Die Maximum-Korrelationsmetrik wird mit Hilfe der Autokorrelation für jeden DAB-Übertragungsmodus separat berechnet. Dabei gehen jeweils einige der in Tabelle 1 gezeigten übertragungsmodusspezifischen Parameter in die Berechnung ein.

**Tabelle 1: Parameter der DAB-Übertragungsmodi (in IQ-Samples)**

| Parameter | TM I | TM II | TM III | TM IV |
|---|---|---|---|---|
| $N_F$...Übertragungsrahmenlänge | 196608 | 49152 | 49152 | 98304 |
| $N_N$...Nullsymbollänge | 2656 | 664 | 345 | 1328 |
| $N_S$...gesamte Symbollänge | 2552 | 638 | 319 | 1276 |
| $N_U$...Symbollänge ohne Schutzintervall | 2048 | 512 | 256 | 1024 |
| $N_G$...Schutzintervalllänge | 504 | 126 | 63 | 252 |
| NumSymb...Anzahl Symbole, deren Länge der Länge eines im Übertragungsmodus I übertragenen Symbols entspricht | 1 | 4 | 8 | 2 |

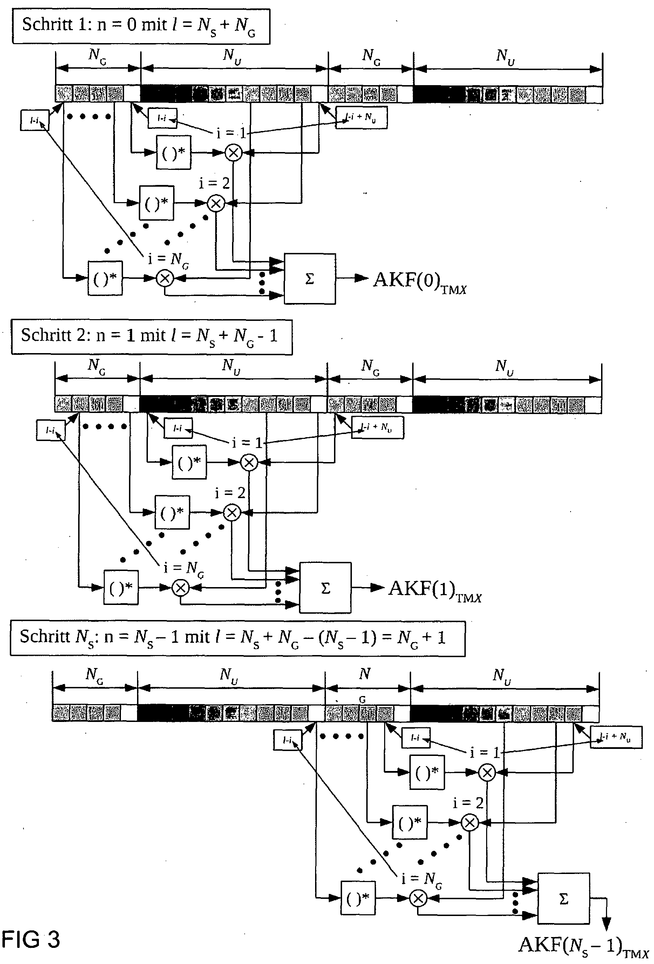

Zum Berechnen der Maximum-Korrelationsmetrik für einen DAB-Übertragungsmodus wird zuerst für jedes von mehreren Symbolen des DAB-Übertragungsmodus in Abhängigkeit von übertragungsmodusspezifischen Parametern eine Autokorrelationsfunktion $AKF(n)_{TMX}$ berechnet (Gleichung 1). Im Prinzip ist dies die Autokorrelation des Schutzintervalls des jeweiligen Symbols mit den IQ-Samples, die genau $N_G$ IQ-Samples in der Zukunft liegen (vgl. Figur 3).

Bei einem DAB-Symbol sind die letzten $N_G$ IQ-Samples eine Wiederholung der ersten $N_G$ IQ-Samples. Auf Grund dieser Tatsache weist die Autokorrelationsfunktion ein markantes Maximum auf, wenn zum Berechnen der Autokorrelationsfunktion für ein Symbol Parameter desjenigen DAB-Übertragungsmodus verwendet werden, in dem das Symbol übertragen wurde.

Die Autokorrelationsfunktion wird durch

$$AKF(n)_{TMX} = \sum_{i=1}^{N_G} IQ^*(l-i)*IQ(l-i+N_U) \qquad (1)$$

mit

$$l = N_S + N_G - n \qquad (2)$$

in dem Bereich

$$0 \le n < N_S \qquad (3)$$

berechnet. Dabei ist $IQ^*$ die konjugiert komplexe von $IQ$ und $l$ liegt im Bereich

$$N_G \le l \le N_G + N_S. \qquad (4)$$

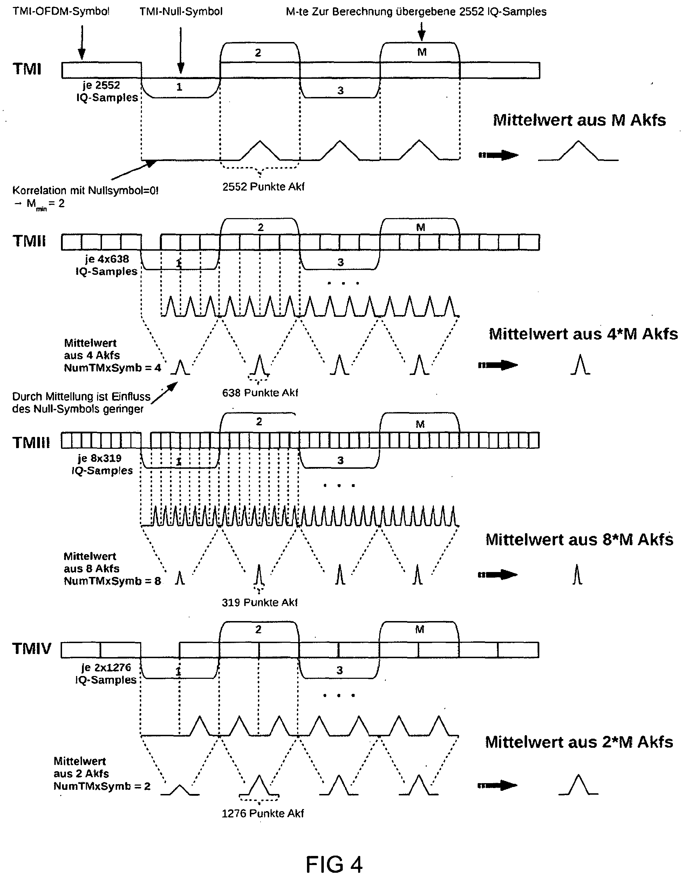

Gleichung (5) beschreibt das Berechnen der Maximum-Korrelationsmetrik (MCM) aus den Autokorrelationsfunktionen der einzelnen Symbole. Die dabei vorgenommene Mittelung der Autokorrelationsfunktionen ist in Figur 4 grafisch dargestellt.

$$MCM_{TMX}(n) = \frac{1}{M}\sum_{M}\frac{1}{NumSymb}\sum_{NumSymb}AKF(n)_{TMX} \qquad (5)$$

**Patentansprüche**

1. Verfahren zum Identifizieren eines Funksignals als Funksignal, das einem bestimmten OFDM-Übertragungsstandard entspricht, wobei dem OFDM-Übertragungsstandard entsprechende OFDM-Symbole jeweils ein Schutzintervall aufweisen, der OFDM-Übertragungsstandard mehrere Übertragungsmodi aufweist und in verschiedenen der Übertragungsmodi übertragene OFDM-Symbole jeweils eine andere Symbollänge aufweisen, mit den folgenden Schritten:

    - Empfangen des Funksignals,
    - Umsetzen des empfangenen Funksignals in das Basisband des OFDM-Übertragungsstandards, sodass ein Basisbandsignal erzeugt wird,
    - Berechnen einer Maximum-Korrelationsmetrik des Basisbandsignals für jeden der Übertragungsmodi unter Verwendung von Parametern des jeweiligen Übertragungsmodus,
    - Berechnen eines Spitzenwert/Durchschnittswert-Verhältnisses für jede der Maximum-Korrelationsmetriken, und den folgenden kennzeichnenden Schritten :

        - Ermitteln des größten Spitzenwert/Durchschnittswert-Verhältnisses derjenigen der Spitzenwert/Durchschnittswert-Verhältnisse, die einen vorgegebenen ersten Schwellenwert überschreiten,
        - Berechnen jeweils einer Differenz zwischen dem ermittelten Spitzenwert/Durchschnittswert-Verhältnis und jedem der anderen Spitzenwert/Durchschnittswert-Verhältnisse und
- Signalisieren, dass das Funksignal dem OFDM-Übertragungsstandard entspricht, wenn jede der Differenzen einen vorgegebenen zweiten Schwellenwert überschreitet.

2. Verfahren gemäß Anspruch 1,
bei dem, wenn keines der Spitzenwert/Durchschnittswert-Verhältnisse den ersten Schwellenwert überschreitet, signalisiert wird, dass das Funksignal nicht dem OFDM-Übertragungsstandard entspricht.

3. Verfahren gemäß einem der Ansprüche 1 und 2,
bei dem das Funksignal auf einer Empfangsfrequenz empfangen wird, wobei das Verfahren, wenn eine der Differenzen den zweiten Schwellenwert nicht überschreitet, für ein auf derselben Empfangsfrequenz empfangenes anderes Funksignal erneut ausgeführt wird.

4. Verfahren gemäß einem der vorhergehenden Ansprüche,
bei dem das Funksignal auf einer Empfangsfrequenz empfangen wird, wobei das Verfahren, wenn keines der Spitzenwert/Durchschnittswert-Verhältnisse den ersten Schwellenwert überschreitet, für ein auf einer anderen Empfangsfrequenz empfangenes Funksignal erneut ausgeführt wird.

5. Verfahren gemäß einem der vorhergehenden Ansprüche,
bei dem, wenn signalisiert wird, dass das Funksignal dem OFDM-Übertragungsstandard entspricht, eine Synchronisierung auf das Basisbandsignal durchgeführt wird, wobei derjenige Übertragungsmodus verwendet wird, zu dem das ermittelte Spitzenwert/Durchschnittswert-Verhältnis gehört.

6. Verfahren gemäß einem der vorhergehenden Ansprüche,
bei dem beim Berechnen der Maximum-Korrelationsmetrik für eine Anzahl aneinandergereihter Abschnitte des Basisbandsignals, deren Länge jeweils einem Symbol des jeweiligen Übertragungsmodus entspricht, jeweils eine Autokorrelationsfunktion berechnet wird, wobei die Anzahl fünf bis dreizehn, acht oder maximal ca. fünfundsiebzig beträgt.

7. Verfahren gemäß einem der vorhergehenden Ansprüche,
bei dem signalisiert wird, dass das Funksignal dem OFDM-Übertragungsstandard entspricht, indem ein Steuersignal an eine Basisbandsignal-Verarbeitungseinheit gesendet wird, sodass die Basisbandsignal-Verarbeitungseinheit aktiviert wird und mit dem Verarbeiten des Basisbandsignals beginnt.

8. Verfahren gemäß einem der vorhergehenden Ansprüche,
bei dem signalisiert wird, dass das Funksignal dem OFDM-Übertragungsstandard entspricht, indem die Information, dass auf dem eingestellten Kanal ein Rundfunksignal des OFDM-Übertragungsstandards empfangbar ist, an einen Benutzer ausgegeben wird.

9. Verfahren gemäß einem der vorhergehenden Ansprüche,
bei dem der OFDM-Übertragungsstandard DAB, DRM oder DVB ist.

10. Rundfunkempfangseinrichtung zum Identifizieren eines Funksignals als Funksignal, das einem bestimmten OFDM-Übertragungsstandard entspricht, welcher mehrere Übertragungsmodi aufweist, wobei dem OFDM-Übertragungsstandard entsprechende OFDM-Symbole jeweils ein Schutzintervall aufweisen und in verschiedenen der Übertragungsmodi übertragene OFDM-Symbole jeweils eine andere Symbollänge aufweisen, mit den folgenden Bestandteilen:

- eine Empfangseinheit, welche zum Empfangen des Funksignals und zum Umsetzen des empfangenen Funksignals in das Basisband des OFDM-Übertragungsstandards, sodass ein Basisbandsignal erzeugt wird, eingerichtet ist, und
- eine Recheneinheit, welche zum Berechnen einer Maximum-Korrelationsmetrik des Basisbandsignals für jeden der Übertragungsmodi unter Verwendung von Parametern des jeweiligen Übertragungsmodus, Berechnen eines Spitzenwert/Durchschnittswert-Verhältnisses für jede der Maximum-Korrelationsmetriken, Ermitteln des größten Spitzenwert/Durchschnittswert-Verhältnisses derjenigen Spitzenwert/Durchschnittswert-Verhältnisse, die einen vorgegebenen ersten Schwellenwert überschreiten, Berechnen jeweils einer Differenz zwischen dem ermittelten Spitzenwert/Durchschnittswert-Verhältnis und jedem der anderen Spitzenwert/Durchschnittswert-Verhältnisse und Signalisieren, dass das Funksignal dem OFDM-Übertragungsstandard entspricht, wenn jede der Differenzen einen vorgegebenen zweiten Schwellenwert überschreitet, eingerichtet ist.

**Claims**

1. Method for identifying a radio signal as a radio signal that corresponds with a certain OFDM transmission standard wherein OFDM symbols corresponding with the OFDM transmission standard each comprise a guard interval, the OFDM transmission standard comprises multiple transmission modes, and OFDM symbols transmitted in different of the transmission modes each comprise another symbol length, the method comprising the following steps:

   - receiving the radio signal,
   - converting the received radio signal into the baseband of the OFDM transmission standard so that a baseband signal is generated,
   - calculating a maximum correlation metric of the baseband signal for each of the transmission modes by using parameters of the respective transmission mode,
   - calculating a peak value / mean value relation for each of the maximum correlation metrics,
   and the following characteristic steps:

   - determining the major peak value / mean value relation of those of the peak value / mean value relations that exceed a predetermined first threshold value,
   - calculating a difference between the determined major peak value / mean value relation and each of the other peak value / mean value relations in each case, and
   - signalling that the radio signal corresponds with the OFDM transmission standard if each of the differences exceeds a predetermined second threshold value.

2. Method according to claim 1
   wherein it is signalled that the radio signal does not correspond to the OFDM transmission standard if none of the peak value / mean value relations exceeds the first threshold value.

3. Method according to one of the claims 1 and 2
   wherein the radio signal is received on a receive frequency and the method is again performed for another radio signal received on the same receive frequency if one of the differences does not exceed the second threshold value.

4. Method according to one of the preceding claims
   wherein the radio signal is received on a receive frequency and the method is again performed for another radio signal received on another receive frequency if none of the peak value / mean value relations exceeds the first threshold value.

5. Method according to one of the preceding claims
   wherein a synchronisation to the baseband signal is performed by using the transmission mode to which the determined peak value / mean value relation belongs if it is signalled that the radio signal corresponds to the OFDM transmission standard.

6. Method according to one of the preceding claims
   wherein during calculating the maximum correlation metric for a number of sections of the baseband signal stringed together whose lengths each correspond to a symbol of the respective transmission mode an autocorrelation function is calculated in each case wherein the number amounts to five to thirteen, eight or maximal ca. seventy five.

7. Method according to one of the preceding claims
   wherein it is signalled that the radio signal corresponds to the OFDM transmission mode by sending a control signal to a baseband signal processing unit so that the baseband signal processing unit is activated and begins processing the baseband signal.

8. Method according to one of the preceding claims
   wherein it is signalled to an user that the radio signal corresponds to the OFDM transmission mode by outputting the information that on the present channel a broadcast signal of the OFDM transmission standard is receivable.

9. Method according to one of the preceding claims

wherein the OFDM transmission mode is DAB, DRM or DVB.

10. Radio broadcast reception device for identifying a radio signal as a radio signal corresponding with a certain OFDM transmission standard comprising multiple transmission modes wherein OFDM symbols corresponding to the transmission standard each comprise a guard interval and OFDM symbols that are transmitted in different of the transmission modes each comprise another symbol lenght, the radio broadcast reception device comprising the following components:

- a reception unit arranged for receiving the radio signal and for converting the received radio signal into the baseband of the OFDM transmission mode so that a baseband signal is generated and
- a processing unit arranged for calculating a maximum correlation metric of the baseband signal for each of the transmission modes by using parameters of the respective transmission mode, calculating a peak value / mean value relation for each of the maximum correlation metrics, determining the major peak value / mean value relation of those peak value / mean value relations that exceed a predetermined first threshold value, calculating a difference between the determined peak value / mean value relation and each of the other peak value / mean value relations in each case and signalling that the radio signal corresponds with the OFDM transmission mode if each of the differences exceeds a predetermined second threshold value.

## Revendications

1. Procédé d'identification d'un signal radio en tant que signal radio qui répond à un standard de transmission OFDM précis, les symboles OFDM conformes au standard de transmission OFDM présentant chacun un intervalle de protection, le standard de transmission OFDM présentant plusieurs modes de transmission et les symboles OFDM transmis dans de différents modes de transmission présentant chacun une longueur de symbole différente, **caractérisé en ce que** le procédé est constitué des étapes suivantes :

- réception du signal radio ;
- transformation du signal radio reçu dans la bande de base du standard de transmission OFDM de sorte qu'un signal de bande de base est créé ;
- calcul d'une métrique de corrélation maximale du signal de bande de base pour chacun des modes de transmission en utilisant des paramètres du mode de transmission respectif ;
- calcul d'un rapport valeur de pointe/valeur moyenne pour chacune des métriques de corrélation maximale et des étapes caractéristiques suivantes :

- détermination du plus grand rapport valeur de pointe/valeur moyenne parmi les rapports valeur de pointe/valeur moyenne qui dépassent une première valeur de seuil définie ;
- calcul d'une différence chacune entre le rapport valeur de pointe/valeur moyenne déterminée et chacun des autres rapports valeur de pointe/valeur moyenne et
- signalisation du fait que le signal radio répond au standard de transmission OFDM si chacune des différences dépasse une deuxième valeur de seuil définie.

2. Procédé selon la revendication 1,
**caractérisé en ce que**, si aucun des rapports valeur de pointe/valeur moyenne ne dépasse la première valeur de seuil, il est signalé que le signal radio ne répond pas au standard de transmission OFDM.

3. Procédé selon l'une des revendications 1 et 2,
**caractérisé en ce que** le signal radio est reçu sur une fréquence de réception, le procédé étant répété pour un autre signal radio reçu sur la même fréquence de réception si l'une des différences ne dépasse pas la deuxième valeur de seuil.

4. Procédé selon l'une des revendications précédentes,
**caractérisé en ce que** le signal radio est reçu sur une fréquence de réception, le procédé étant répété pour un signal radio reçu sur une autre fréquence de réception si aucun des rapports valeur de seuil/valeur moyenne ne dépasse la première valeur de seuil.

5. Procédé selon l'une des revendications précédentes,
**caractérisé en ce que**, lorsqu'il est signalé que le signal radio répond au standard de transmission OFDM, une synchronisation avec le signal de bande de base est réalisée, le mode de transmission utilisé étant celui auquel appartient le rapport valeur de pointe/valeur moyenne déterminé.

6. Procédé selon l'une des revendications précédentes, **caractérisé en ce que**, lors du calcul de la métrique de corrélation maximale pour un nombre de sections enchaînées du signal de bande de base dont la longueur correspond chacune à un symbole du mode de transmission respectif, une fonction d'autocorrélation est calculée chacune, le nombre étant égal à cinq à treize, huit ou au maximum env. soixante-quinze.

7. Procédé selon l'une des revendications précédentes, **caractérisé en ce qu'**il est signalé que le signal radio répond au standard de transmission OFDM en envoyant un signal de commande à une unité de traitement de signaux de bande de base de sorte que ladite unité de traitement de signaux de bande de base est activée et commence à traiter le signal de bande de base.

8. Procédé selon l'une des revendications précédentes, **caractérisé en ce qu'**il est signalé que le signal radio répond au standard de transmission OFDM en émettant l'information selon laquelle un signal radio conforme au standard de transmission OFDM peut être reçu sur la chaîne réglée, est émis à un utilisateur.

9. Procédé selon l'une des revendications précédentes, qui utilise le standard de transmission OFDM DAB, DRM ou DVB.

10. Dispositif de réception radio pour l'identification d'un signal radio en tant que signal radio qui répond à un standard de transmission OFDM précis qui présente plusieurs modes de transmission, les symboles OFDM conformes au standard de transmission OFDM présentant chacun un intervalle de protection et les symboles OFDM transmis dans de différents modes de transmission présentant chacun une longueur de symbole différente, **caractérisé en ce que** le dispositif est composé des éléments suivants :

- une unité de réception conçue pour la réception du signal radio et pour la transformation du signal radio reçu à la bande de base du standard de transmission OFDM de sorte qu'un signal de bande de base est créé, et
- une unité de calcul conçue pour le calcul d'une métrique de corrélation maximale du signal de bande de base pour chacun des modes de transmission en utilisant des paramètres du mode de transmission respectif, pour le calcul d'un rapport valeur de pointe/valeur moyenne pour chacune des métriques de corrélation maximales, pour la détermination du plus grand rapport valeur de pointe/valeur maximale parmi les rapports valeur de pointe/valeur moyenne qui dépassent une première valeur de seuil définie, pour le calcul d'une différence chacune entre le rapport valeur de pointe/valeur moyenne déterminé et chacun des autres rapports valeur de pointe/valeur moyenne et pour la signalisation du fait que le signal radio répond au standard de transmission OFDM si chacune des différences dépasse une deuxième valeur de seuil définie.

FIG 1

Start → DAB-Kanal einstellen ⟶ 201

Funksignal empfangen ⟶ 202

Basisbandsignal erzeugen ⟶ 203

MCM für jeden DAB-Übertragungsmodus berechnen ⟶ 204

PAR für jede MCM berechnen ⟶ 205

ein PAR > 1. Schwellenwert?  ja          nein ⟶ 206

größtes PAR ermitteln ⟶ 210

Differenzen berechnen ⟶ 211

alle Differenzen > 2. Schwellenwert?  nein          ja ⟶ 212

213 Höchstzahl erreicht?  nein          ja

214 Signalisieren, dass das Funksignal dem DAB-Übertragungsstandard entspricht

207 Signalisieren, dass das Funksignal nicht dem DAB-Übertragungsstandard entspricht

alle DAB-Kanäle geprüft?  nein          ja ⟶ 208

neuen DAB-Kanal einstellen ⟶ 209

Ende

FIG 2

15

FIG 3

FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0978974 A2